# EUROPÄISCHE PATENTANMELDUNG

(11) **EP 2 503 139 A2**
(43) Veröffentlichungstag der Anmeldung: **26.09.2012**
(21) Anmeldenummer: 12160501.8
(22) Anmeldetag: 21.03.2012
(51) Int. Cl.: F03B 3/00, F03B 3/14

(54) **Wasserturbine**

(30) Priorität: 22.03.2011 DE 202011000649 U
(71) Anmelder: Schandl, Franz, 84180 Loiching (DE)
(72) Erfinder: Schandl, Franz, 84180 Loiching (DE)
(74) Vertreter: Gustorf, Gerhard

(57) **Zusammenfassung**

Die Wasserturbine hat ein radial durchströmtes Leitrad (12) mit feststehenden Leitschaufeln (14) und ein innerhalb des Leitrads (12) um eine Wellenachse (22) rotierendes Laufrad (16) mit einem Laufradkörper (20), in dem die Laufradschaufeln (18) mittels eines Verstellapparates um zur Wellenachse (22) parallele Schwenkachsen (26) verdrehbar sind. Gemäß der Erfindung ist vorgesehen, dass der Verstellapparat aus einem koaxial auf der Wellenachse (22) angeordneten Drehteller (28) besteht, der über wenigstens ein Stellorgan (36) mit dem Laufradkörper (20) verbunden ist und auf dem Umfang verteilte Klappenhebel (34) aufweist, deren radial innere Enden an dem Drehteller (28) angelenkt sind, während die radial äußeren Enden (38) mit den Schwenkachsen (26) verbunden sind, die in dem Laufradkörper (20) verdrehbar gelagert sind. Dabei ist es für die Betriebssicherheit von Vorteil, wenn jeder Klappenhebel (34) mit seinem radial äußeren Ende (38) frei drehbar in einem an der Schwenkachse (26) fest angebrachten Lagerorgan gelagert ist, an dem ein Ende einer Rückholfeder (48) befestigt ist, deren anderes Ende mit dem Klappenhebel (34) verbunden ist.

## Beschreibung

Die Erfindung betrifft eine Wasserturbine mit den Merkmalen des Oberbegriffs des Patentanspruchs 1.

Eine Wasserturbine mit den Merkmalen des Oberbegriffs des Schutzanspruchs 1 in umgekehrter Bauweise ist aus DE 43 02 473 A1 bekannt. Hier sind die Leitschaufeln feststehender Bestandteil des Leitrades, während die Laufradschaufeln verstellt werden können. Hierzu dient ein Verstellapparat, der aus einem Hebelmechanismus besteht, welcher über Stellelemente alle Leitschaufeln gleichzeitig um ihre Schwenkachsen verstellt, wozu die Leitschaufeln paarweise über Stellglieder exzentrisch zu ihren Schwenkachsen miteinander gekoppelt sind. Die gesamte Konstruktion des Verstellapparates ist damit aufgrund der zahlreichen Stellelemente und Stellglieder mit den einzelnen Gelenken sehr kompliziert und störungsanfällig.

Der Erfindung liegt die Aufgabe zugrunde, eine Wasserturbine der eingangs erwähnten Bauart zur Verfügung zu stellen, die mit konstruktiv einfachen Mitteln eine wesentlich einfachere und sichere Verstellung der Laufradschaufeln erlaubt.

Die Lösung dieser Aufgabe ergibt sich aus den Merkmalen im kennzeichnenden Teil des Schutzanspruchs 1. Da gemäß der Erfindung der Verstellapparat nicht mehr aus einem anfälligen und mit vielen Gelenken versehenen Hebelmechanismus besteht, sondern aus einem Drehteller, mit dem alle Laufradschaufeln gleichzeitig und gleichmäßig verdreht werden können, ist die Wasserturbine gemäß der Erfindung nicht nur konstruktiv weniger aufwendig, sondern erleichtert auch die Montage und verbessert die Betriebssicherheit.

In vorteilhafter Weiterbildung der Erfindung ist jeder Klappenhebel mit seinem radial äußeren Ende frei drehbar in einem an der Schwenkachse fest angebrachten Lagerorgan gelagert, an dem ein Ende einer Rückholfeder befestigt ist, deren anderes Ende mit dem Klappenhebel verbunden ist.

Mit dieser Maßnahme wird eine "schwimmende Lagerung" der Klappenhebel an der Schwenkachse für die Laufradschaufeln erreicht, so dass beispielsweise dann, wenn ein Fremdkörper im Spalt zwischen zwei Laufradschaufeln die Schwenkung in die geschlossene Position verhindert, eine Beschädigung oder Zerstörung in diesem Bereich unterbunden wird. In diesem Fall werden alle Laufradschaufeln über den Drehteller in ihre geöffnete Stellung zurück geschwenkt, damit der Fremdkörper in Richtung zum Saugrohr ausgespült wird. Danach werden alle Laufradschaufeln wieder in ihre Schließstellung gedreht.

Weitere Merkmale und Vorteile der Erfindung ergeben sich aus den Patentansprüchen und aus der folgenden Beschreibung eines Ausführungsbeispiels, das in der Zeichnung dargestellt ist. Es zeigen:
Figur 1 eine schematische Draufsicht auf eine Wasserturbine gemäß der Erfindung,
Figur 2 eine perspektivische Ansicht der Wasserturbine ohne Leitrad,
Figur 3 die Unteransicht auf ein erfindungsgemäß ausgebildetes Laufrad mit Laufradschaufeln in der geöffneten Stellung,
Figur 4 eine der Figur 3 entsprechende Darstellung mit den Laufradschaufeln in geschlossener Stellung,
Figur 5 eine Ansicht des Laufrades der Figuren 3 und 4,
Figur 6 eine Schnittdarstellung in der Ebene VI-VI der Figur 5,
Figur 7 in vergrößertem Maßstab eine Schnittdarstellung in der Ebene VII-VII der Figur 5,
Figur 8 eine Unteransicht des Laufrades in der Ebene VIII - VIII der Figur 5,
Figur 9 in vergrößertem Maßstab einen Vertikalschnitt in der Ebene IX-IX der Figur 3,
Figur 10 die Einzelheit X aus Figur 9,
Figur 11 die Ansicht eines Klappenhebels mit vorgespannter Rückdruckfeder,
Figur 12 eine Draufsicht auf den Klappenhebel der Figur 11,
Figur 13 die Ansicht des Klappenhebels mit gespannter Rückdruckfeder aufgrund einer Klemmung und
Figur 14 eine Draufsicht auf den Klappenhebel der Figur 13.

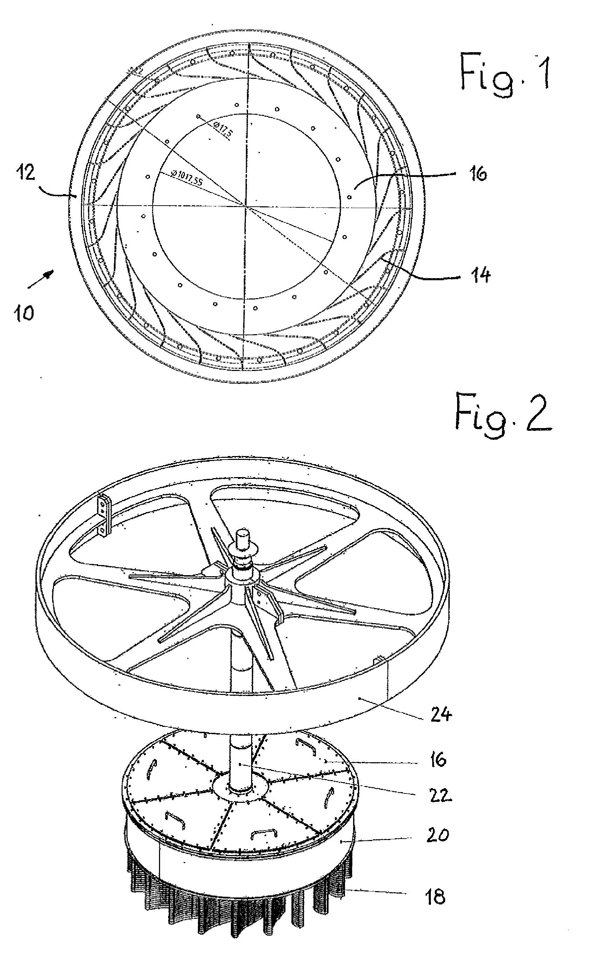

Figur 1 zeigt in Draufsicht den schematischen Aufbau der Wasserturbine 10, die aus einem Leitrad 12 mit feststehenden Leitschaufeln 14 und einem Laufrad 16 besteht, das innerhalb des Leitrades 12 drehbar angeordnet ist.

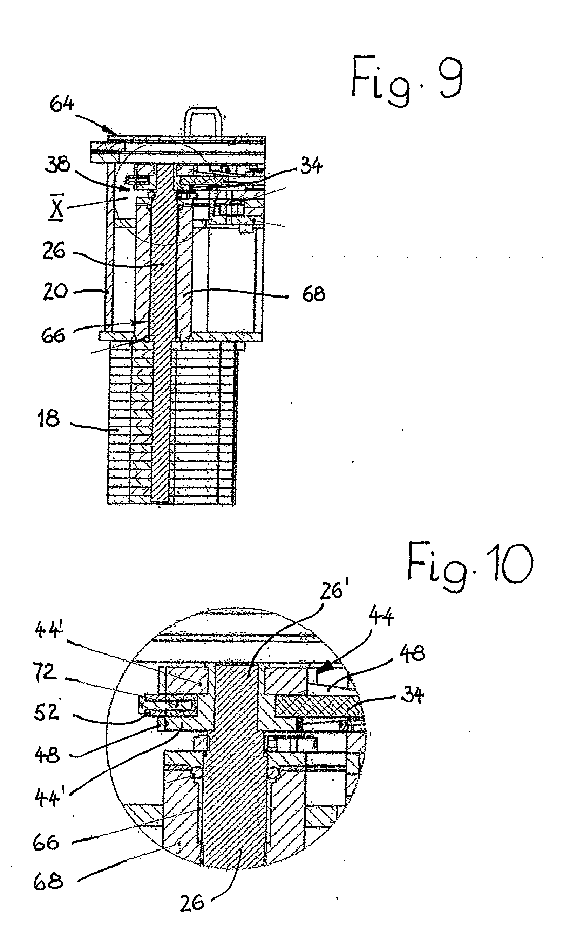

Figur 2 zeigt in perspektivischer Darstellung das Laufrad 16, welches mit Laufradschaufeln 18 bestückt ist, die in einem zylindrischen Laufradkörper 20 verstellbar angebracht sind. Der durch einen Deckel 64 nach oben abgeschlossene Laufradkörper 20 (Figur 9) ist fest mit einer Rotorwelle 22 verbunden, die ein Antriebsrad 24 eines nicht dargestellten Generators in Drehung versetzt.

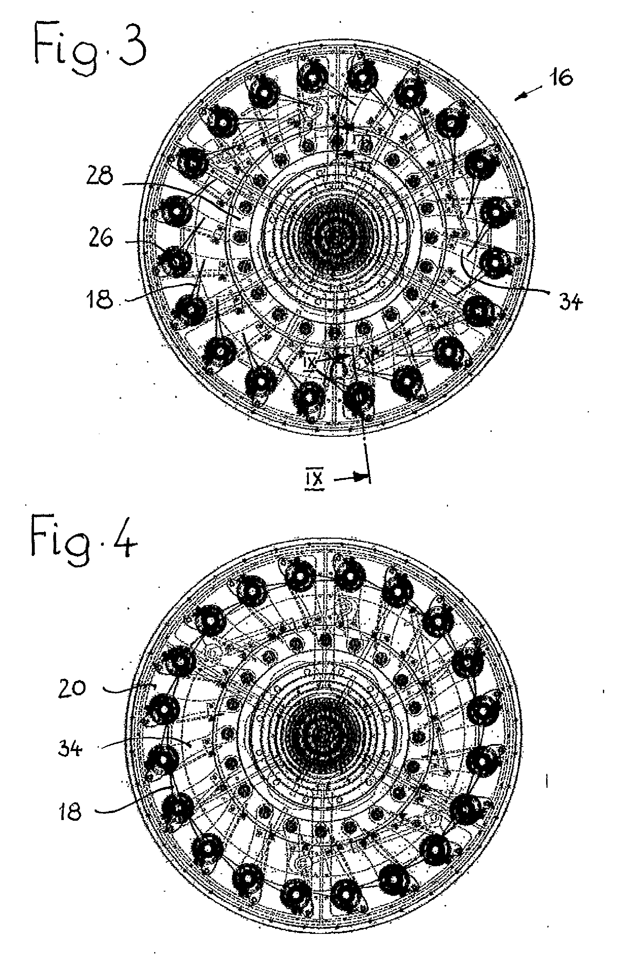

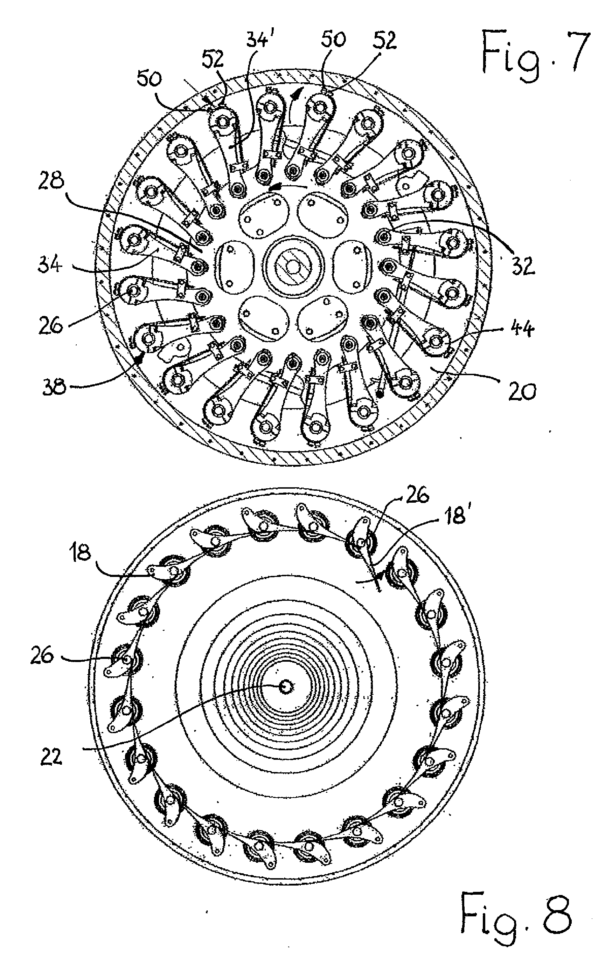

In den Figuren 3 bis 8 ist das Laufrad 16 im einzelnen dargestellt, wobei in der Ansicht der Figuren 3 und 8 die Laufradschaufeln 18 zu erkennen sind, die mittels zueinander paralleler Schwenkachsen 26, an denen sie befestigt sind, verdreht werden können. Die Schwenkachsen 26 sind vertikal angeordnet und verlaufen auch parallel zur Achse der Rotorwelle 22. Wie Figur 9 zeigt, ist jede Schwenkachse 26 in einer Lagerbuchse 66 gelagert, die über eine zylindrische Lagerhülse 68 in dem Laufradkörper 20 befestigt ist.

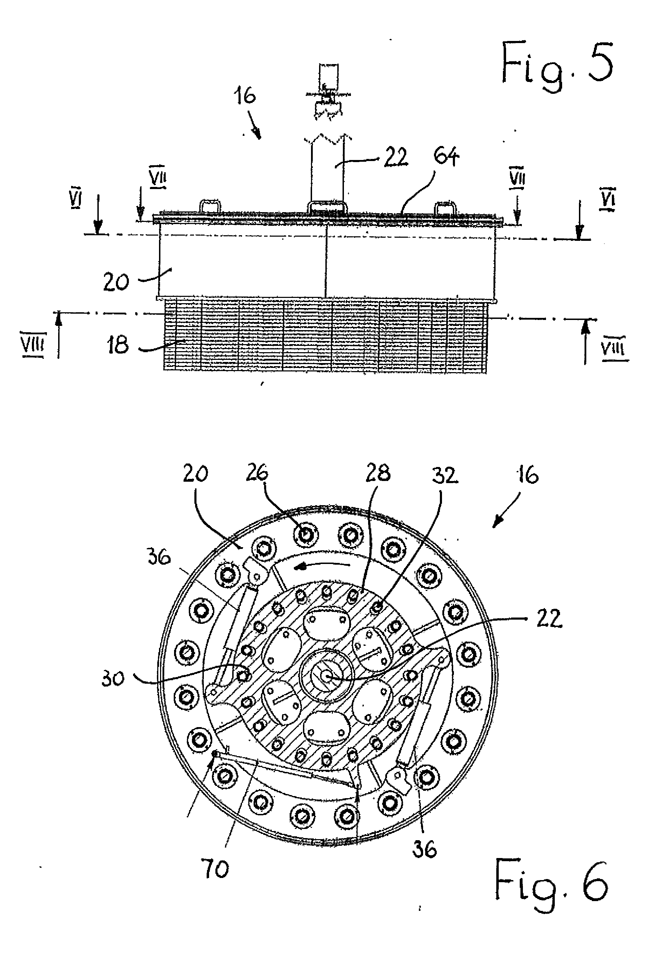

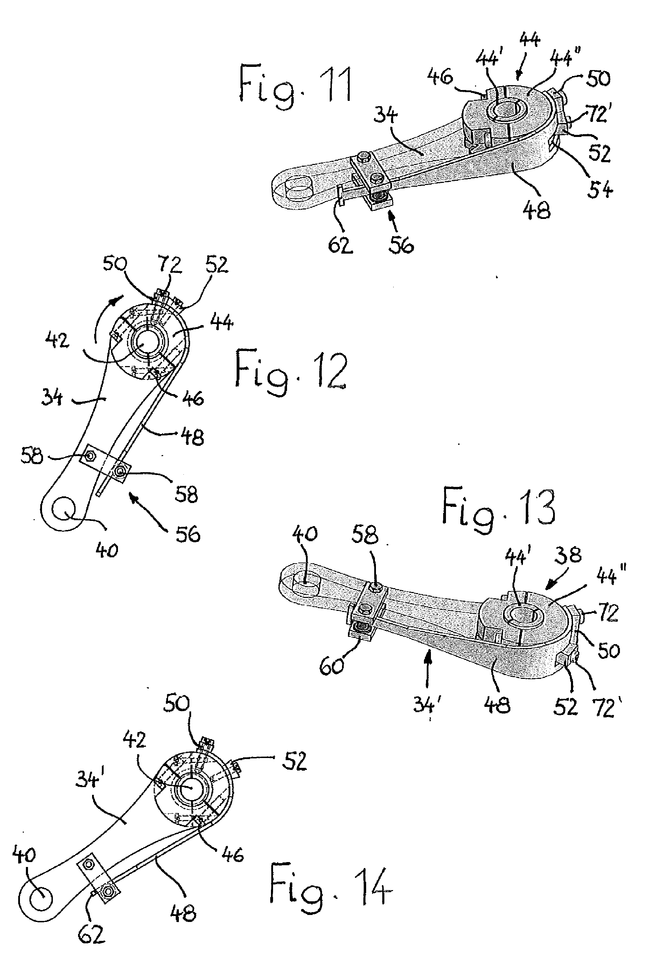

Zur gemeinsamen Verstellung der Laufradschaufeln 18 durch ihre Schwenkachsen 26 dient ein in den Figuren 6 und 7 gezeigter Drehteller 28, der auf der Wellenachse 22 drehbar gelagert ist. Der Drehteller 28 hat auf seinem Umfang gleichmäßig verteilt radial angeordnete Langlöcher 30, wobei in jedes Langloch 30 ein Schwenkzapfen 32 eines Klappenhebels 34 eingreift (vgl. Figur 7). Der Schwenkzapfen 32 ist in eine in den Figuren 11 bis 14 gezeigte Aufnahmebohrung 40 des Klappenhebels 34 eingesetzt. Der Drehteller 28 ist über zwei einander gegenüberliegende Stellorgane 36 mit dem Laufradkörper 20 verbunden. Im dargestellten Ausführungsbeispiel sind die Stellorgane 36 als Hydraulikzylinder ausgebildet. In Figur 6 ist zu erkennen, dass zwischen den beiden Stellorganen ein elektronischer Weggeber 70 angeordnet ist.

Aus den Figuren 7 bis 10 ergibt sich weiter, dass jede Laufradschaufel 18 durch den ihr zugeordneten Klappenhebel 34 verschwenkt werden kann. Hierzu ist das radial äußere Ende 38 jedes Klappenhebels 34 drehbar mit der Schwenkachse 26 der Laufradschaufel 18 verbunden, während am radial inneren Ende der bereits erwähnte Schwenkzapfen 32 in das zugeordnete Langloch 30 des Drehtellers 28 eingreift.

Vor allem aus Figur 10 geht hervor, dass auf dem oberen Ende 26' jeder Schwenkachse 26 ein Lagerorgan in Form eines Klemmrings 44 fest angebracht ist, der aus einem Unterteil 44' und einem Oberteil 44" besteht, die beide radial geteilt und durch Klemmschrauben 46 (vgl. Figuren 11 und 12) auf dem oberen Achsenende 26' kraftschlüssig verspannt sind. In den Figuren 11 und 13 ist die Bohrung 42 des Klemmringes 44 gut zu erkennen, in der das obere Ende 26' der Schwenkachse 26 festgeklemmt wird.

Die Figuren 9 und 10 zeigen weiter, dass zwischen dem Unterteil 44' des Klemmringes 44 und seinem Oberteil 44' das radial äußere Ende 38 des Klappenhebels 34 um die Schwenkachse 26 verdrehbar gelagert ist. An der Außenseite des Klemmringes 44 ist ein Klemmstück 50 angebracht, das mit zwei Schrauben 72 am Unterteil 44' und am Oberteil 44" befestigt ist. Dem Klemmstück 50 ist ein Anschlagelement 52 zugeordnet, das über eine weitere Schraube 72' am äußeren Ende 38 des Klappenhebels 34 befestigt ist.

Über das Klemmstück 50 ist durch die beiden Schrauben 72 an dem Oberteil 44" und dem Unterteil 44' ein Ende einer Rückholfeder in Form eines Federbandes 48 befestigt, dessen freies Ende an einem Halteelement 56 des Klappenhebels 34 abgestützt ist. Das Halteelement 56 besteht aus zwei durch Schrauben 58 miteinander verbundenen Platten 60, die durch eine der beiden Schrauben 58 fest oder schwenkbar an dem Klappenhebel 34 angebracht sind. Am freien Ende des Federbandes 48 ist ein Endanschlag 48 ausgebildet, der ein Herausrutschen zwischen den beiden Platten 60 verhindert.

Eine Teildrehung des Drehtellers 28 wird durch die beiden Stellorgane 36 eingeleitet. Bei der in Figur 7 eingezeichneten Drehrichtung des Drehtellers 28 im Gegenuhrzeigersinn werden dadurch die Klappenhebel 34 für alle Laufradschaufeln 18 des Laufrades 16 im Uhrzeigersinn gemeinsam verstellt, um den Durchtrittsquerschnitt zwischen den Laufradschaufeln 18 einzustellen oder ganz zu verschließen. Durch die Drehbewegung des jeweiligen Klappenhebel 34 in Uhrzeigerrichtung wird diese Drehung über das vorgespannte Federband 48 auf den Klemmring 44 und damit auf die Schwenkachse 26 übertragen, bis das Klemmstück 50 am Anschlagelement 52 zur Anlage kommt, so dass die an der Schwenkachse 26 befestigte Laufradschaufel 18 den Durchschnittsquerschnitt verengt oder schließt.

Figur 8 zeigt eine Laufradschaufel 18', die durch einen nicht dargestellten Fremdkörper daran gehindert ist, in Richtung des eingezeichneten Pfeiles die geschlossene Stellung einzunehmen. In diesem Fall wird die Schwenkbewegung des zugehörigen Klappenhebels 34 nicht auf die Schwenkachse 26 übertragen. Vielmehr dreht sich das radial äußere Ende 38 des Klappenhebels 34 frei zwischen dem Unterteil 44' und dem Oberteil 44" des Klemmrings 44, so dass eine Beschädigung oder Zerstörung der Laufradschaufel 18' verhindert wird. Durch die geschilderte Schwenkbewegung des Klappenhebels 34 im Klemmring 44 wird das Federband 48 gespannt, wobei dessen Endanschlag 62 ein Herausrutschen aus dem Halteelement 56 verhindert.

Durch eine gemeinsame Öffnung aller Laufradschaufeln 18 mittels des Drehtellers 28 werden diese sodann in die volle Öffnungsstellung zurück geschwenkt, so dass der Fremdkörper ausgespült wird. Anschließend können alle Laufradschaufeln 18 durch die Kraft der gespannten Federbänder 48 über den Drehteller 28 in die Schließstellung zurückgeschwenkt werden.

## Patentansprüche

1. Wasserturbine, umfassend ein radial durchströmtes Leitrad (12) mit feststehenden Leitschaufeln (14) und ein innerhalb des Leitrads (12) um eine Wellenachse (22) rotierendes Laufrad (16) mit einem Laufradkörper (20), in dem die Laufradschaufeln (18) mittels eines Verstellapparates um zur Wellenachse (22) parallele Schwenkachsen (26) verdrehbar sind, **dadurch gekennzeichnet, dass** der Verstellapparat aus einem koaxial auf der Wellenachse (22) angeordneten Drehteller (28) besteht, der über wenigstens ein Stellorgan (36) mit dem Laufradkörper (20) verbunden ist und auf dem Umfang verteilte Klappenhebel (34) aufweist, deren radial innere Enden an dem Drehteller (28) angelenkt sind, während die radial äußeren Enden (38) mit den Schwenkachsen (26) verbunden sind, die in dem Laufradkörper (20) verdrehbar gelagert sind.

2. Wasserturbine nach Anspruch 1, **dadurch gekennzeichnet, dass** die Stellorgane (36) aus Hydraulikzylindern bestehen.

3. Wasserturbine nach Anspruch 1 oder 2, **dadurch gekennzeichnet, dass** die radial inneren Enden der Klappenhebel (34) in radial angeordneten Langlöchern (30) des Drehtellers (28) gelagert sind.

4. Wasserturbine nach einem der vorhergehenden Ansprüche, **dadurch gekennzeichnet, dass** jeder Klappenhebel (34) mit seinem radial äußeren Ende (38) frei drehbar in einem an der Schwenkachse (26) fest angebrachten Lagerorgan gelagert ist, an dem ein Ende einer Rückholfeder (48) befestigt ist, deren anderes Ende mit dem Klappenhebel (34) verbunden ist.

5. Wasserturbine nach Anspruch 4, **dadurch gekennzeichnet, dass** das Lagerorgan aus einem Klemmring (44) mit einem Unterteil (44') und einem Oberteil (44") besteht, die beiden an der Schwenkachse (26) klemmend befestigt sind und die zwischen sich das äußere Ende (38) des Klappenhebels (34) drehbar aufnehmen.

6. Wasserturbine nach Anspruch 5, **dadurch gekennzeichnet, dass** die Rückholfeder in Form eines Federbandes (48) mittels eines am Oberteil (44') und am Unterteil (44") befestigten Klemmstücks (50) mit dem Klemmring (44) verbunden ist, während das freie Ende des Federbandes (48) über ein Halteelement (56) am Klappenhebel (34) abgestützt ist.

7. Wasserturbine nach Anspruch 6, **dadurch gekennzeichnet, dass** dem am Klemmring (44) befestigten Klemmstück (50) ein Anschlagelement (52) zugeordnet ist, das am äußeren Ende (38) des Klappenhebels (34) befestigt ist.
